# EUROPEAN PATENT APPLICATION

(11) **EP 1 881 578 A1**
(43) Date of publication of application: **23.01.2008**
(21) Application number: 07075608.5
(22) Date of filing: 17.07.2007
(51) Int. Cl.: H02G 3/30, F16L 3/233

(54) **Cable ties authentically verifiable**

(30) Priority: 18.07.2006 US 831511 P
(71) Applicant: Thomas & Betts International, Inc., Wilmington, DE 19809 (US)
(72) Inventor: Laporte, Richard, Collierville, Tennessee 38017 (US); Wallgren, Robert L., Bartlett, Tennessee 38135 (US)
(74) Representative: Vermeulen, Martijn

(57) **Abstract**

An authentically verifiable cable tie made from a formulation that includes a plastic resin in an amount of from about 90% to 99% by weight and an additive in an amount of from about 1% to 10% by weight that is viewable by the unassisted eye when exposed to an infrared light source. The plastic resin is preferably nylon, more preferably nylon 6,6, and the additive is a nylon modified concentrate. The cable tie can have a locking mechanism and, preferably, once the locking mechanism is engaged, it cannot be opened without damaging it.

## Description

This application claims priority from provisional application Serial No. 60/831,511, filed on July 18, 2006.

### FIELD OF THE INVENTION

The present invention relates generally to a cable tie, and more specifically, to a cable tie that can be used as a security device to detect tamperingor unauthorized access.

### BACKGROUND OF INVENTION

Heightened security concerns have led many companies and government agencies to look for new security devices that can be easily implemented at a minimum cost. Many different solutions to the security problem have been proposed including chemical detectors, detectors for radioactive materials, high resolution cameras and other high tech electronic devices. In contrast to these new security devices, cable ties are relatively low tech and have been used for years as security seals against tampering and unauthorized access to containers, equipment and facilities.

Cable ties are well known devices used to bundle or secure a group of articles such as electrical wires or cables. U.S. Patent No. 3,102,311 to Martin et al. is an early example of ties used for such purposes. However, cable ties with locking mechanisms have also found utility as inexpensive security devices Cable ties of conventional construction include a cable tie head, a longitudinal strap extending from the head and a tail at the opposite end of the strap. The strap is wrapped around a bundle of articles and the tail is inserted through an aperture or passage in the head. The head of the cable tie typically includes a locking element in the passage which engages the strap after it is inserted into the passage. Once the tail is pulled through the passage, the locking element secures the strap in the head.

Advances in cable tie construction have taken many forms and shapes. Many of these advances have been in the area of the locking element carried in the cable tie head to secure the strap therein. The art has seen the use of flexible locking elements which are integrally molded with the head. Also, ties have been developed employing metallic barbs embedded into the head which serve as the locking element. The metallic barb cable ties have been long known to exhibit exceptional pull-out performance in that the barb securely bites into the strap locking the strap in place in the head. These metallic barb ties have the barb embedded in the cable tie head at an acute angle with respect to the strap so that the strap can easily pass through the head in only one direction Due in part to the bending characteristics of the barb as well as the angle at which it is embedded, the metal barb permits insertion of the cable tie strap through the head aperture. However, if the strap is withdraw in a direction opposite to the insertion direction, the barb end bites into the strap, preventing such withdrawal.

Attaching locking cable ties to a bundle of cables, sealed containers, windows or gates provides a minimum level of security. In order to gain access, the cable ties have to be removed either by cutting or forcibly opening the locking mechanism. In either case, tampering can easily be detected. In addition, colored cable ties that are used as security seals also provide an easy means of identification. However, even colored cable ties can be easily copied, allowing a thief to cut a cable tie and then replace it with an identical copy. Thus, the thief can gain undetected access without leaving any sign of tampering or breach of security.

Thus, there exists a need to provide a cable tie which cannot be easily copied by a thief and which can be easily verified as an authentic cable tie by the user.

### SUMMARY OF THE INVENTION

In accordance with the present invention, an authentically verifiable cable tie is provided. The cable tie is made from a formulation that includes a plastic resin and an additive that is viewable by the unassisted eye when exposed to an infrared light source. Preferably, the plastic resin is nylon polypropylene, polycarbonate or polyethylene, more preferably nylon 6,6, and the additive is a nylon modified concentrate. In the preferred embodiments, the cable tie has a locking mechanism. In the most preferred embodiments, once the locking mechanism is engaged, it cannot be opened without damaging it.

The formulation preferably contains from about 90% to 99% by weight plastic resin and from about 1% to 10% by weight additive, more preferably, from about 95% to 99% by weight plastic resin and about 1% to 5% by weight additive and, most preferably, from about 97% to 99% by weight plastic resin and about 1% to 3% by weight additive. In a particularly preferred embodiment, the formulation has a plastic resin to additive ratio by weight of about 50:1.

The authentically verifiable cable ties provide security devices that can be easily identified when breached and which cannot easily be duplicated and replaced.

### DETAILED DESCRIPTION OF THE INVENTION

The present invention is a cable tie that contains an additive that provides simple "yes/no" authentication of cable ties through use of a light source or energy scanner. The present invention is also a method of authenticating cable ties containing an additive in the cable tie material using an infrared detector.

The present invention uses an additive in the plastic formulations for cable ties, which is not visible in ordinary light, but emits a vivid color when exposed to an infrared light source. Infrared (IR) radiation is electromagnetic radiation of a wavelength longer than that of visible light, but shorter than that of radio waves, which cannot be seen with the unaided eye. The name infrared means "belowred," red being the color of visible light of longest wavelength. Infrared radiation spans three orders of magnitude and has wavelengths between approximately 750 nm and 1 mm. The additive of the present invention contain particles that refract infrared light so that it can be viewed by the unassisted eye. When a cable tie that contains the additive is viewed in normal light, it looks like a typical cable tie. When the same cable tie is exposed to an infrred light source, bright colors can be viewed.

As used herein, the term "cable tie" is intended to include cable ties as well as cable tie accessories, such as mounting bases, identification tags, markers, and other clamps, clips and retainers normally associated with cables or cable ties. Such cable ties and cable tie accessories are sold by Thomas & Betts Corporation under its TY-RAP^{®} brand name. Moreover, the term "cable tie" as used herein is not limited to ties that are used with bundled wires and cables, but also refers to any type of plastic tie which includes a strap and a locking head on opposing ends or which has opposing ends that can be attached together to form a closed loop. Examples of such ties are found inU.S. Patent No. 3,186,047 to Schwester et al.; U.S. Patent Nos. 5,621,949 and 5,630,252 to Wells; U.S. Patent Nos. 6,076,235; 6,128,809; and 6,185,791 to Khokhar; U.S. Patent No. 7,017,237 to Magno, Jr. et al.; and U.S. Des. 205,940 to Miller; all of which are incorporated herein in their entirety. However, the examples in these patents are not intended to limit the construction of the term "cable tie" as used herein in any way.

Cable ties of the present invention are typically molded from formulations that include plastic materials such as polyamide or polycarbonate resins. Different types of nylon have been found to be preferable, although polypropylene, polyethylene and other plastics, as well as combinations thereof can be used. In addition, varying amounts of colorants and processing additives can be included. The present invention combines an additive to these formulations which acts as an identifier so that cable ties made from these formulations can be easily authenticated Accordingly, any formulation of plastic materials that is suitable for making a cable tie can be used in the present invention.

A variety of different additives can be used as an identifier in the cable tie formulations. For example, additives that can be used in the present invention are disclosed in U.S. Patent No. 6,432,715 to Nelson et al. and U.S. Publication No. 2002/0122878 to Kerns et al., both of which are incorporated herein in their entirety. A preferred additive that can be used in the present invention is a nylon modified concentrate sold by Amco Plastic Materials, Inc. of Farmingdale, New York. When formulations that include this additive are molded into cable ties, the cable ties are rendered reactive to infrared light so that they can be identified by an infrared detector. When these cable ties are used as security seals against tampering and replacement, they can be easily and quickly authenticated.

The cable ties molded with the additives of the present invention are reactive to infrared detectors. The cable ties emit a vivid color when exposed to an infrared light, which allows them to be quickly and easily authenticated The additive does not affect the properties of the modified cable ties and the strength and appearance of the cable ties are essentially the same. Therefore, the cable ties containing the additive can be molded into a variety of shapes and sizes and have various colors.

The additives of the present invention can be detected using a variety of portable infrared scanners. When exposed to infrared light, the additive in a cable tie can be visually identified by a change in the color of the cable tie and the presence of the additive can also trigger an audible infrared detector. One of the major benefits of the present invention is that the detection systems are simple and can be used in the field by law enforcement and customs agents as well as private manufacturers and individual end-users.

The formulations that are used to make the cable ties of the present invention are plastic resins which are modified with an additive that reacts to infrared light. The cable ties made from the modified resins can be used for all plastic (one-piece) or 2-piece cable tie constructions, wherein a metal barb is inserted in the locking mechanism In a preferred embodiment. the additive is added to nylon 6,6. However, any type of resin used in the construction of cable ties can be modified with the additive and used to form the cable ties of the present invention. The reactive additive can be added to the formulation prior to molding or it can be added during the molding process. It is also within the scope of the present invention to add the additive as a secondary process, such as a coating process.

The formulations of the present invention preferably contain from about 1% to about 10% by weight of the additive, more preferably from about 1% to about 5% by weight and most preferably from about 1% to about 3% by weight. The balance of the formulations are selected from a number of different plastics that are well know to those skilled in the art and contain from about 90% to about 99% by weight of materials that are commonly used in the manufacture of cable ties, preferably polyamides and polycarbonate resins Preferred formulations contain from about from about 95% to about 99% by weight and the most preferred formulations contain from about 97% to about 99% by weight. Colorants and processing additives, when used, are present in an amount of less than 5% by weight and are part of the balance of the formulations.

The cable ties have a locking mechanism at one end that engages the opposing end to form a loop. Such locking mechanisms are well know to those skilled in the art. In preferred embodiments of the present invention, the locking mechanisms are designed for a single use. Once the locking mechanism is engaged, it cannot be opened without visibly damaging it. This allows any tampering to be easily detected.

### EXAMPLES

The examples set forth below serve to provide further appreciation of the invention but are not meant in any way to restrict the scope of the invention.

### Example 1

In this example, the additive was a nylon modified concentrate obtained form AMCO Plastic Materials, Inc. and it was mixed with nylon 6,6 in a ratio 1:50 (i.e., one part additive to 50 parts nylon 6,6) and heated to a temperature of about 600°F. The heated additive/nylon 6,6 mixture was then molded into cable ties and cooled to room temperature.

A laser pen similar to the GPA- Series Professional Green Laser Pointers sold by Lasermate Group, Inc. was used as an infrared detector to scan the cable ties. An infrared signature was observed from the cable ties which emitted a bright, fluorescent green color when exposed to the laser pen. This confirmed that the cable ties contained an additive that reacts to infrared light.

Thus, while there have been described the preferred embodiments of the present invention, those skilled in the art will realize that other embodiments can be made without departing from the spirit of the invention, and it is intended to include all such further modifications and changes as come within the true scope of the claims set forth herein.

## Claims

1. An authentically verifiable cable tie made from a formulation comprising:
a plastic resin; and
an additive that is viewable by the unassisted eye when exposed to an infrared light source.

2. The authentically verifiable cable tie in accordance with claim 1, wherein the plastic resin is nylon, polypropylene, polycarbonate or polyethylene.

3. The authentically verifiable cable tie in accordance with claim 1, wherein the plastic resin is nylon 6,6.

4. The authentically verifiable cable tie in accordance with claim 1, wherein formulation has a plastic resin to additive ratio by weight of about 50:1.

5. The authentically verifiable cable tie in accordance with claim 1, wherein he formulation contains from about 90% to 99% by weight plastic resin and about 1% to 10% by weight additive.

6. The authentically verifiable cable tie in accordance with claim 1, wherein the formulation contains from about 95% to 99% by weight plastic resin and about 1% to 5% by weight additive.

7. The authentically verifiable cable tie in accordance with claim 1, wherein the formulation contains from about 97% to 99% by weight plastic resin and about 1% to 3% by weight additive.

8. The authentically verifiable cable tie in accordance with claim 1, wherein the additive is a nylon modified concentrate.

9. The authentically verifiable cable tie in accordance with claim 1, wherein the plastic resin is nylon and the additive is a nylon modified concentrate.

10. An authentically verifiable cable tie made from a formulation comprising:
a plastic resin; and
an additive that is viewable by the unassisted eye when exposed to an infrared light source,
wherein the cable tie has a locking mechanism.

11. The authentically verifiable cable tie in accordance with claim 10, wherein once the locking mechanism is engaged, it cannot be opened without damaging the locking mechanism.

12. The authentically verifiable cable tie in accordance with claim 10, wherein the plastic resin is nylon, polypropylene, polycarbonate or polyethylene.

13. The authentically verifiable cable tie in accordance with claim 10, wherein the plastic resin is nylon 6,6.

14. The authentically verifiable cable tie in accordance with claim 10, wherein formulation has a plastic resin to additive ratio of 50:1.

15. The authentically verifiable cable tie in accordance with claim 10, wherein the formulation contains from about 90% to 99% by weight plastic resin and about 1% to 10% by weight additive.

16. The authentically verifiable cable tie in accordance with claim 10, wherein the additive is a nylon modified concentrate.

17. The authentically verifiable cable tie in accordance with claim 10, wherein the plastic resin is nylon and the additive is a nylon modified concentrate.
